# EUROPÄISCHE PATENTSCHRIFT

(11) **EP 2 562 481 B1**
(45) Veröffentlichungstag und Bekanntmachung des Hinweises auf die Patenterteilung: **02.01.2019**
(21) Anmeldenummer: 12180512.1
(22) Anmeldetag: 15.08.2012
(51) Int. Cl.: F24C 15/20, B01D 46/00, B01J 20/08, B01J 20/10, B01J 20/12, B01J 20/14, B01J 20/20, B01J 20/28

(54) **Dunstabzugsvorrichtung mit einer Luftaufbereitungsvorrichtung**
Fume hood device with an air preparation device
Dispositif d'aspiration de vapeur avec un dispositif de préparation d'air

(30) Priorität: 22.08.2011 DE 102011081301
(43) Veröffentlichungstag der Anmeldung: 27.02.2013
(73) Patentinhaber: BSH Hausgeräte GmbH, 81739 München (DE)
(72) Erfinder: Eich, Holger, 76287 Rheinstetten (DE); Metz, Daniel, 76689 Karlsdorf-Neuthard (DE); Schnatz, Martina, 75015 Bretten (DE)

(56) Entgegenhaltungen:
- EP-A1- 0 069 323
- EP-A2- 0 074 063
- EP-A2- 2 006 009
- WO-A1-02/09777
- WO-A1-02/49743
- JP-A- 2001 149 451
- JP-A- 2005 138 078
- JP-A- 2005 245 998
- JP-A- 2005 305 268
- JP-A- 2009 213 759
- US-A1- 2004 110 458
- US-A1- 2005 150 516

## Beschreibung

Die vorliegende Erfindung betrifft eine Dunstabzugsvorrichtung, die eine Dunstabzugshaube und eine Luftaufbereitungsvorrichtung umfasst.

Für die Aufbereitung von Luft aus luftführenden Haushaltsgeräten, insbesondere Dunstabzugshauben, wird neben einer Reinigung mittels eines Filtermaterials auch eine Behandlung mittels Aktivierung, insbesondere Sauerstoffaktivierung, eingesetzt.

Als Filterelemente zur passiven Reinigung der Luft ist beispielsweise aus der JP 2005 305 268 A eine Vorrichtung mit einem deodorierenden Material für einen Dunstabzug eines Ofens bekannt. Hierbei wird ein deodorierendes Material mit einer kontinuierlichen porösen Struktur verwendet, das auf hydriertem MagnesiumSilikat-Ton basiert. Zusätzlich zu dem deodorierenden Material ist ein Aktivkohlefilter vorgesehen, der in Strömungsrichtung nach dem deodorierenden Material angeordnet ist. Zudem ist ein Fettfilter vor dem deodorierenden Material angeordnet. Weiterhin ist eine UV-Lichtquelle vorgesehen.

JP 2009 213 759 A beschreibt weiterhin eine Filtervorrichtung, bei der ein anorganischer poröser Filter und ein deodorierender Filter verwendet werden. Weiterhin ist eine UV-Lichtquelle vorgesehen.

Weiterhin beschreibt EP 0 074 063 B1 einen sorptiv wirkenden Körper. Hierbei wird eine körnige oder pulvrige Feststoffkomponente, die aus einem Sorptionsmittel (z.B. Aktivkohle) besteht oder dieses im Gemisch enthält, mit einem Bindemittel zusammengebracht und durch dieses, vorzugsweise an einem Trägerstoff fixiert.

Die US 2004/0110458 A1 offenbart eine Dunstabzugsvorrichtung und deren Verwendung. An der Dunstabzugsvorrichtung ist ein Fettfilter in einem Vorbehandlungsbereich vorgesehen. Der Vorbehandlungsbereich ist über einen Kanal mit einer optischen Behandlungseinheit verbunden. Die optische Behandlungseinheit 119 umfasst photokatalytische Einheiten. In den Einheiten 61 sind photokatalytische Filter angeordnet, zwischen denen Lichtquellen vorgesehen sind.

In der JP 2005 138078 A wird ein Filter für einen Luftreiniger beschrieben. Der Luftreiniger ist ein Luftreiniger für Räume, wie beispielsweise medizinische Einrichtungen. Das Filtermaterial kann zu Sterilisierungszwecken mit UV-Licht bestrahlt werden kann.

WO 02/09777A1 beschreibt ein Verfahren zur Behandlung von Umgebungsluft beispielsweise hinsichtlich Bakterien. Die Luft wird in einer Vorrichtung behandelt, die eine Schaumschicht, eine Schicht mineralischer Salze, einen mechanischen Filter, eine Schicht Pflanzen sowie eine UV-, Magnet- oder Schallbehandlungseinheit und einen dieser Einheit nachgeschalteten Aktivkohlefilter aufweist.

JP2005245998 A offenbart einen Sterilisierungs / Deodorisierungsfilter und eine Luftreinigungsvorrichtung mit einem solchen Filter. Auch bei dieser Vorrichtung sind lediglich eine oder mehrere UV-Lampen vorgesehen.

Schließlich offenbart die US 2005/0150516 A1 eine Vorrichtung zur Herstellung eines Halbleiters beschrieben.

Für die Aufbereitung von Luft aus luftführenden Haushaltsgeräten, insbesondere Dunstabzugshauben, ist beispielsweise aus der DE 10 2006 008265 A1 eine Luftaufbereitungsvorrichtung bekannt. Bei dieser und anderen Arten der Luftaufbereitung kommt es zur Bildung von schädlichen Gasen, wie beispielsweise Ozon. Das für den Reinigungsvorgang erforderliche Ozon darf das Gerät aber nicht verlassen, da dies zumindest zur Geruchsbelästigung des Benutzers, im schlimmsten Fall aber sogar zu körperlichen Beschwerden führen würde. Zu diesem Zweck werden in der Regel Filter aus Aktivkohle eingesetzt. Dabei wird in der Luft vorhandenes Ozon in der Aktivkohle zurück gehalten. Die Verwendung von Aktivkohlefiltern bei dieser Art der Luftaufbereitung ist beispielsweise in der DE 10 2008 054 775 A1 beschrieben.

Die Aktivkohlefilter sollen hierbei katalytisch wirken sowie beispielsweise nicht vollständig abgebautes und überschüssiges Ozon einlagern. Allerdings setzt sich der Filter mit der Zeit zu und beispielsweise Ozon greift auch den Aktivkohlefilter selbst an. Daher muss der Filter abhängig von den Gebrauchsgewohnheiten in wiederkehrenden Abständen gewechselt werden.

Aufgabe der vorliegenden Erfindung ist es, eine Möglichkeit zu schaffen, mittels derer eine zuverlässige Luftreinigung von Verunreinigungen, insbesondere von Gerüchen, auch langfristig erzielt werden kann.

Der Erfindung liegt die Erkenntnis zugrunde, dass diese Aufgabe gelöst werden kann, indem eine Kombination aus aktiver Luftbehandlung und Verwendung mineralischer Adsorber zum Filtern der Luft für die Luftaufbereitung eingesetzt wird.

Gemäß der Erfindung wird die Aufgabe daher gelöst durch eine Dunstabzugsvorrichtung mit den Merkmalen des Anspruchs 1.

Als Luftaufbereitungsvorrichtung wird hierbei eine Vorrichtung bezeichnet, in der verunreinigte Luft, insbesondere mit Geruchsstoffen, gegebenenfalls mit reaktiven Spezies und/oder gegebenenfalls mit Flüssigkeit beladene Luft, die gegebenenfalls bereits durch Entfernen von Fett und anderen Verunreinigungen vorgereinigt ist, so aufbereitet wird, dass die Luft beim Verlassen der Vorrichtung von Geruchsstoffen und anderen Verunreinigungen weitestgehend befreit ist. Das luftführende Haushaltsgerät stellt vorzugsweise eine Dunstabzugsvorrichtung mit Dunstabzugshaube, insbesondere eine Dunstabzugsvorrichtung für eine Küche, dar.

Als Aktivierungsvorrichtung zur aktiven Luftbehandlung wird eine Vorrichtung bezeichnet, durch die Reaktionsprodukte oder Umgebungsbedingungen erzeugt werden, die für die Behandlung der Luft verwendet werden. Die erfindungsgemäße Luftaufbereitungsvorrichtung kann daher auch als aktive Filtervorrichtung bezeichnet werden. Die Aktivierungsvorrichtung ist eine elektrisch betriebene, das heißt elektrisch betätigbare Vorrichtung. Die Aktivierungsvorrichtung dient erfindungsgemäß insbesondere zur Erzeugung hoher Energien mittels derer die Luft behandelt werden kann.

Das mindestens eine Filterelement stellt hingegen einen passiven Filter dar. Dies bedeutet, dass das Filtern der Luft an dem Filterelement lediglich durch das Filtermaterial bewirkt oder unterstützt wird. Hierbei kommen sowohl die Zusammensetzung als auch die Form des Filters und insbesondere des Filtermaterials zum Tragen.

Erfindungsgemäß ist in der Luftaufbereitungsvorrichtung ein Luftbehandlungsraum vorgesehen. Dieser Luftbehandlungsraum stellt einen freien, das heißt nicht mit Material gefüllten Raum dar. Hierdurch wird es möglich in dem Raum die für die aktive Luftbehandlung erforderlichen Reaktionen ablaufen zu lassen und eine gute Verteilung der zu behandelnden Luft zu gewährleisten. Zudem kann auch eine gute Durchmischung mit reaktiven Spezies, die zur aktiven Behandlung eventuell erzeugt werden, erfolgen. Diese Vorteile sind bei einem mit Filtermaterial ausgefüllten Luftbehandlungsraum nicht möglich.

Der Luftbehandlungsraum ist erfindungsgemäß zudem zumindest bereichsweise durch zumindest eines der Filterelemente begrenzt. Durch diese Ausgestaltung des Luftbehandlungsraums können zum einen die genannten, durch den freien Raum gegebenen Vorteile erzielt werden. Zudem kann durch das Vorsehen des Filterelementes eine passive Filterung nach oder gleichzeitig mit der aktiven Luftbehandlung erfolgen. Die Luft, die durch die aktive Luftbehandlung bereits zumindest teilweise von Verunreinigungen, insbesondere von Geruchsstoffen, befreit wurde, kann durch das Hindurchtreten durch das Filterelement von noch verbleibenden Verunreinigungen befreit werden. Hierbei können sowohl originäre Verunreinigungen als auch gegebenenfalls reaktive Spezies, die erst bei der aktiven Luftbehandlung erzeugt wurden und noch in der Luft vorhanden sind, entfernt werden. Da das Befreien der Luft von Verunreinigungen insbesondere an der Oberfläche des Filterelementes erfolgt, hat die erfindungsgemäße Anordnung des Filterelementes weitere Vorteile. Insbesondere, kann die von der verunreinigten Luft angeströmte Filteroberfläche maximiert werden. Diese Maximierung kann insbesondere bei einem Luftbehandlungsraum, der an mehr als einer Seite, vorzugsweise an mindestens zwei Seiten, durch Filterelemente begrenzt ist, erreicht werden. Das Filterelement oder die Filterelemente stellen vorzugsweise die Begrenzungswand oder Begrenzungswände der Luftaufbereitungsvorrichtung zu der Umgebung dar.

Weiterhin weist bei der erfindungsgemäßen Luftaufbereitungsvorrichtung mindestens ein Filterelement Filtermaterial auf, das zumindest teilweise aus zumindest einem mineralischen Adsorber besteht.

Als mineralische Adsorber werden erfindungsgemäß Materialien bezeichnet, die vorzugsweise natürlich vorkommende Materialen darstellen. Diese Adsorber können je nach Anwendung gegebenenfalls modifiziert sein. Im Gegensatz zu anderen Filtermaterialien, wie beispielsweise Aktivkohle, ist bei diesen mineralischen Adsorbern eine chemische Behandlung vor dem Einsatz als Filtermaterial nicht erforderlich. Dadurch werden die Herstellungskosten verringert. Zudem können mineralische Adsorber einfach entsorgt werden.

Mineralische Adsorber weisen bei der erfindungsgemäßen Luftaufbereitungsvorrichtung aber auch zusätzliche Vorteile auf. Durch die Verwendung dieses Filtermaterials kann die Kombination zwischen aktiver und passiver Luftbehandlung nämlich optimiert werden. Insbesondere können die mineralischen Adsorber zum einen katalytisch für die Adsorption von Geruchsstoffen und anderen Verunreinigungen wirken. Weiterhin werden aber durch mineralische Adsorber auch zuverlässig Reaktionsprodukte, insbesondere reaktive Spezies, wie beispielsweise Ozon, aus der Luft, die durch das Filterelement mit mineralischen Adsorbern als Filtermaterial strömt, ausgefiltert. Schließlich sind mineralische Adsorber in der Regel nicht brennbar. Somit können die Sicherheitsanforderungen, die an Haushaltsgeräte gestellt werden, eingehalten werden und der Einsatz des Filtermaterials ist auch in Bereichen hoher Temperatur, wie insbesondere über einer Dunstabzugshaube möglich.

Durch die Kombination einer aktiven Luftbehandlung mit passiver Filterung können zudem auch Geruchsstoffe oder andere Verunreinigungen in der Luft, die durch die aktive Luftbehandlung nicht entfernt wurden, an einem Austreten aus der Luftaufbereitungsvorrichtung gehindert werden, da die Luft zum Austreten aus der Luftaufbereitungsvorrichtung und insbesondere dem Luftbehandlungsraum durch das Filterelement hindurch treten muss.

Gemäß einer Ausführungsform stellt mindestens einer der mineralischen Adsorber ein Silikat, insbesondere ein Schichtsilikat, dar. Es können hierbei Dreischicht-Silikate und/oder Zweischicht-Silikate in modifizierter oder unmodifizierter Form verwendet werden. Die Verwendung von Schichtsilikaten, die auch als Blatt- oder Phyllosilikate bezeichnet werden, ist unter anderem wegen deren hohen spezifischen Oberfläche von Vorteil, da dadurch die wirksame Fläche für die Ablagerung von Verunreinigungen aber auch gegebenenfalls für eine Reaktion mit den Gasen, die in dem Luftbehandlungsraum erzeugt wurden, zur Verfügung steht. Schließlich weisen Schichtsilikate eine hohe Ionenaustauschkapazität auf. Somit weist das Adsorbermaterial zum einen eine hohe Aufnahmefähigkeit zur Bindung ungewünschte Verunreinigungen, die flüssig oder gasförmig sein können, und zu anderen eine einfache Möglichkeit der Reaktivierung oder Regeneration auf, beispielsweise durch thermische Behandlung. Schichtsilikate sind nicht brennbar, so dass diese unbedenklich sind für den Einsatz als Filtermaterial in einem Filterelement, das oberhalb und damit in der Nähe einer Kochstelle eingesetzt wird. Schließlich kann durch die Verwendung von Schichtsilikaten auch die Standzeit des Filterelementes verlängert werden, da diese ein größeres Aufnahmevolumen für Verunreinigungen als andere Filtermaterialien, wie beispielsweise Aktivkohle, besitzen. Zudem können Schichtsilikate gegen Reaktionen zwischen Verunreinigungen und / oder reaktiver Spezies in dem Filtermaterial resistenter sein.

Gemäß bevorzugter Ausführungsformen stellt der mineralische Adsorber smektithaltige Tonerde, Bentonit oder Halloysit dar.

Als smektithaltige Tonerde und insbesondere smektitreiche Tonerde wird ein quellfähiges Dreischichtsilikat bezeichnet. Beispielsweise werden als Smektite hierbei Montmorillonit, Beidellit und/oder Nontronit verwendet. Bentonit bezeichnet insbesondere eine Tonmineralmischung, die zum Großteil aus Montmorillonit besteht. Halloysit stellt ein Zweischichtsilikat, insbesondere Aluminiumsilikat dar, das eine vorwiegend röhrförmige Struktur im Mikrometerbereich und kleiner aufweist und in chemischer Hinsicht dem Kaolin ähnlich ist.

Diese bevorzugten mineralischen Adsorber haben sich erstaunlicherweise als besonders geeignet zum Abscheiden von Verunreinigungen und von reaktiven Spezies erwiesen. Zudem können diese bevorzugten mineralischen Adsorber beständig gegen Zersetzung durch diese Ablagerungen oder durch Reaktionen zwischen diesen Ablagerungen sein.

Gemäß einer Ausführungsform stellt das Filtermaterial eine Mischung aus einem mineralischen Adsorber und mindestens einem weiteren mineralischen Adsorber oder aus mindestens einem mineralischen Adsorber und Aktivkohle dar. Die Mischung, die als Filtermaterial verwendet wird, kann somit ausschließlich aus mineralischen Adsorbern oder aber aus einer Mischung von mineralischem Adsorber oder mineralischen Adsorbern und Aktivkohle bestehen. Indem als Filtermaterial eine Mischung verwendet wird, können unterschiedliche Eigenschaften eingestellt werden. Insbesondere kann das Filtermaterial entsprechend den Substanzen, wie Geruchsstoffen oder reaktiven Spezies gewählt werden, die aus dem Luftstrom beseitigt werden sollen. Bei einer Mischung, in der auch Aktivkohle als Filtermaterial enthalten ist, können zudem Synergieeffekte zwischen den mineralischen Adsorbern und der Aktivkohle genutzt werden. Das Filtermaterial kann als Granulat, als Körner und/oder als Agglomerate vorliegen. Hierbei lässt sich eine gewünschte Mischung des Filtermaterials auf einfache Weise herstellen. Sind außer den mineralischen Adsorbern auch weitere Materialien in dem Filterelement enthalten, so bildet vorzugsweise der Anteil des mineralischen Adsorbers den größten Anteil. Das heißt das Filtermaterial besteht überwiegend aus einem oder mehreren mineralischen Adsorbern.

Sind mehr als ein mineralischer Adsorber vorgesehen, so liegt es auch im Rahmen der Erfindung, dass die unterschiedlichen Adsorber in unterschiedlichen Formen, beispielsweise als Granulat oder als Körner vorliegen. Der Vorteil der Verwendung von Granulaten besteht zum einen darin, dass diese leicht miteinander gemischt werden können. Dadurch kann eine Mischung unterschiedlicher Adsorber erzeugt werden und so die Zusammensetzungen des Filtermaterials auf einfache Weise eingestellt werden kann. Zum anderen weisen Granulate eine große äußere Oberfläche auf, so dass die Adsorptionsfähigkeit der Adsorber effektiv genutzt werden kann.

Gemäß einer weiteren Ausführungsform umfasst das Filterelement einen Formkörper aus zumindest einem Teil des Filtermaterials, insbesondere einen Extrusionsformkörper. Der Formkörper weist vorzugsweise eine offene Form auf und kann beispielsweise eine Wabenstruktur besitzen, die insbesondere durch Extrusion einfach hergestellt werden kann. Durch eine solche offene Form des Formkörpers werden gezielte Angriffsflächen für die Adsorption gebildet. Zudem ist die Durchlässigkeit eines solchen Formkörper gegenüber der Verwendung einer Matte oder anderen durchgehenden Lage verbessert, so dass der Luftstrom nur geringfügig durch das Filterelement behindert wird. Schließlich kann durch die Verwendung eines Formkörpers aus Filtermaterial in dem Filterelement die Luftführung in dem Filterelement gezielt eingestellt werden. Der Formkörper besteht vorzugsweise zumindest teilweise aus mindestens einem der mineralischen Adsorber.

Ist zusätzlich als Filtermaterial beispielsweise Aktivkohle vorgesehen, kann diese bei dem erfindungsgemäßen Filterelement mit dem oder den mineralischen Adsorbern vermischt sein. Alternativ ist es aber auch möglich dass die Aktivkohle mit dem mineralische Adsorber oder den mineralischen Adsorbern versetzt ist oder der mineralische Adsorber oder die mineralischen Adsorber mit der Aktivkohle versetzt sind. Als Versetzen wird in diesem Zusammenhang insbesondere eine Verbindung verstanden, bei der die Komponenten vorzugsweise chemisch miteinander verbunden sind. Insbesondere kann beispielsweise der mineralische Adsorber mit Aktivkohle dotiert werden oder umgekehrt. Alternativ kann das Versetzen aber auch ein Beschichten der einen Komponente mit der anderen darstellen. Beispielsweise kann der mineralische Adsorber mit Aktivkohlepulver beschichtet werden. Eine solche Beschichtung kann insbesondere in den Fällen einfach ausgeführt werden, in denen der mineralische Adsorber oder die mineralischen Adsorber in Granulatform oder als Formkörper vorliegen. Auch das Beschichten eines Formkörpers aus Aktivkohle mit einem oder mehreren mineralischen Adsorbern ist erfindungsgemäß möglich.

Ein Vorteil des Versetzens der Komponenten des Filtermaterials miteinander besteht insbesondere darin, dass die konkrete Zusammensetzung des Filtermaterials an bestimmten Stellen des Filterelementes gezielt eingestellt und aufrecht erhalten werden kann. Bei einer reinen Mischung von beispielsweise Granulaten oder Körnern der Komponenten, die erfindungsgemäß auch Möglich ist, kann es beim Transport oder beim Bewegen des Filterelementes zu einer ungewollten Veränderung der Zusammensetzung an unterschiedlichen Stellen kommen. Die Synergieeffekte die durch das gemeinsame Vorsehen von Aktivkohle und mineralischen Adsorbern erzielt werden können, können dadurch gegebenenfalls stellenweise nicht mehr genutzt werden.

Gemäß einer Ausführungsform liegt das Filtermaterial in Lagen in dem Filterelement vor, wobei die Zusammensetzung von zumindest zwei Lagen unterschiedlich zueinander ist. Die Lagen sind so in dem Filterelement angeordnet, dass diese sich senkrecht zu der Anströmrichtung des Filterelementes erstrecken. Durch einen schichtförmigen Aufbau, der auch als lagenförmiger Aufbau bezeichnet wird, kann zum einen die genaue Zusammensetzung des Materials in dem Filterelement zuverlässig eingestellt werden. Zum anderen kann die Zusammensetzung der Lagen so gewählt werden, dass die Eigenschaften der einzelnen Lagen deren Position entsprechend vorliegen. So kann beispielsweise in einer Lage, die dem Luftbehandlungsraum zugewandt ist, ein Filtermaterial verwendet werden, das zur Adsorption von reaktiven Spezies, wie beispielweise Ozon, besonders geeignet ist, während in einer benachbarten Lage beispielsweise ein Filtermaterial verwendet wird, das zur Aufnahme von Flüssigkeiten, wie beispielsweise Wasser, besonders geeignet ist. Hierdurch kann ein selektives Ausfiltern von Substanzen in den einzelnen Lagen erfolgen. Hierdurch wird zum einen die Reinigung der Luft, die das Filterelement durchströmt, verbessert und zum anderen kann die Filterstandzeit erhöht werden. Schließlich wird auch eine Reaktion zwischen den abgeschiedenen Substanzen durch den lagenförmigen Aufbau verhindert und Reaktionen zwischen Reaktionsprodukten der einzelnen Lagen können verhindert werden. Die Lagen können beispielsweise durch Gitter oder andere Trennmittel voneinander getrennt sein, um ein Vermischen des Filtermaterials einer Lage mit dem der benachbarten Lage zu verhindern oder zumindest zu minimieren.

Erfindungsgemäß umfasst die Aktivierungsvorrichtung eine lonisierungsvorrichtung und/oder eine Dissoziierungsvorrichtung. Als lonisierungsvorrichtung wird hierbei insbesondere eine Vorrichtung bezeichnet, mittels derer Moleküle in dem Luftstrom verändert, zersetzt und/oder oxidiert werden können. Als Dissoziierungsvorrichtung wird insbesondere eine Vorrichtung bezeichnet, mittels derer insbesondere Molekülketten zersetzt werden. Die lonisierungsvorrichtung und die Dissoziierungsvorrichtung können auch durch eine einzige Vorrichtung realisiert sein. Als lonisierungs- und/oder Dissoziierungsvorrichtung wird bei der erfindungsgemäßen Luftaufbereitungsvorrichtung insbesondere eine Vorrichtung verwendet, mittels derer hohe Energien in den zu behandelnden Luftstrom eingebracht werden. Die Ionisierungs- und/oder Dissoziierungsvorrichtung ist erfindungsgemäß ein Plasmagenerator. Hierbei kann beispielsweise eine Vorrichtung zur dielektrisch behinderten Entladung zwischen zwei flächigen Elektroden verwendet werden. Aber auch andere Plasmaquellen können verwendet werden.

Durch das Vorsehen einer Ionisierungs- und/oder Dissoziierungsvorrichtung in dem Luftbehandlungsraum können Geruchsstoffe und weitere Verunreinigungen in dem Luftbehandlungsraum verändert, chemisch zersetzt und/oder oxidiert werden. Insbesondere können unterschiedliche Moleküle beziehungsweise aus mehreren Molekülen bestehende Teilchen ionisiert oder dissoziiert werden und so noch in dem Luftbehandlungsraum aus dem Luftstrom ausgeschieden werden. Hierbei können auch die Reaktionsprodukte die bei der Ionisierung beziehungsweise Dissoziierung entstehen, mit den Verunreinigungen in dem Luftstrom reagieren und so weitere Umsetzungen beispielsweise von Geruchsstoffen bewirken. Eine solche reaktive Spezie, die bei der Ionisierung oder Dissoziierung entsteht, ist beispielsweise Ozon. Das Ozon reagiert mit anderen in dem Luftstrom enthaltenen Teilchen, wobei eine Oxidationsreaktion stattfinden kann.

Da bei der erfindungsgemäßen Luftaufbereitungsvorrichtung der Luftbehandlungsraum zumindest teilweise durch ein Filterelement begrenzt ist, tritt die in dem Luftbehandlungsraum behandelte Luft durch dieses Filterelement hindurch bevor sie die Luftaufbereitungsvorrichtung verlässt. Da bei dem erfindungsgemäß verwendeten Filterelement mineralische Adsorber als Filtermaterial vorgesehen sind, werden die angeregten, ionisierten oder dissoziierten Teilen oder Moleküle in diesem gehalten. Hierdurch können in dem Filterelement weitere Reaktionen, insbesondere Oxidation, der beispielsweise noch nicht oxidierten Geruchsmoleküle oder Geruchsstoffe ablaufen. Hierbei kann auch Ozon, das von dem mineralischen Adsorber gut zurückgehalten wird, mit weiteren Geruchsstoffen reagieren und diese in geruchsneutrale Stoffe zersetzen. Die Reinigung des Luftstroms wird daher weiter verbessert. Der oder die mineralischen Adsorber können bei diesen in dem Filterelement stattfindenden Reaktionen katalytisch wirken, das heißt außer dem reinen Zurückhalten der Reaktionsprodukte aus dem Luftbehandlungsraum auch die zwischen den Reaktionsprodukten in dem Filterelement ablaufenden Reaktionen oder Reaktionen in dem Luftbehandlungsraum unterstützen.

Schließlich kann durch die in dem Filterelement stattfindenden Reaktionen auch zumindest teilweise eine Regeneration des Filtermaterials erfolgen. Insbesondere bei der Reaktion von Ozon mit anderen in dem mineralischen Adsorber gehaltenen Stoffen, wird Reaktionsenergie freigesetzt. Diese Reaktionsenergie kann gegebenenfalls eine Regeneration des Adsorbers bewirken oder zumindest unterstützen. Auch bei der Reaktion von Ozon entstehender Sauerstoff kann die Regenerierung des Filtermaterials unterstützen oder diese bewirken. Somit kann die Standzeit des Filterelementes durch die Verwendung mineralischer Adsorber nach einer aktiven Luftbehandlung weiter gesteigert werden.

Dunstabzugsvorrichtungen mit Dunstabzugshaube werden insbesondere zum Absaugen und Reinigen von Dünsten und Wrasen verwendet, die beim Kochen entstehen. Die Dunstabzugshaube ist hierbei oberhalb des Kochfeldes angeordnet. An dieser Einbauposition kommt es während des Kochvorgangs zum Teil zu hohen Temperaturen und bei einigen Kochvorgängen sogar zu einem Flammeneintritt in die Dunstabzugshaube. Durch das bei der erfindungsgemäßen Luftaufbereitungsvorrichtung verwendete Filtermaterial in Form von zumindest einem mineralischen Adsorber ist aber ein Entzünden des Filtermaterials nicht zu befürchten, da dieses nicht oder nur schwer brennbar ist.

Die Luftaufbereitungsvorrichtung ist bei der erfindungsgemäßen Dunstabzugsvorrichtung vorzugsweise so angeordnet, dass diese einem Fettfilter der Dunstabzugshaube in Strömungsrichtung der Luft nachgeschaltet ist. Dies bedeutet, dass die in die Luftaufbereitungsvorrichtung eintretende Luft im Wesentlichen von festen Verunreinigungen, insbesondere Schwebteilchen, und auch flüssigen Verunreinigungen, wie Wasser- und Fetttropfen, bereits befreit ist. Hierdurch kann ein Zusetzen des Filterelementes mit diesen Verunreinigungen verhindert werden. Gemäß einer bevorzugten Ausführungsform ist die Luftaufbereitungsvorrichtung so angeordnet, dass diese nicht nur dem Fettfilter der Dunstabzugshaube sondern auch dem Gebläse oder Lüfter der Dunstabzugshaube in Strömungsrichtung der Luft nachgeschaltet ist. Durch diese Anordnung der Luftaufbereitungsvorrichtung wird verhindert, dass das Gebläse mit höherer Leistung betrieben werden muss. Vor der Luftaufbereitungsvorrichtung kann ein weiterer Vorfilter eingesetzt sein, an dem weitere Fettpartikel abgeschieden werden.

Die Luftaufbereitungsvorrichtung kann in der Dunstabzugshaube integriert sein. Beispielsweise kann die Luftaufbereitungsvorrichtung in einer Verkleidung oder Verblendung der Dunstabzugshaube, wie beispielsweise einem Kanal oder Kamin, angeordnet sein.

Gemäß einer Ausführungsform ist die Luftaufbereitungsvorrichtung zu der Dunstabzugshaube separat angeordnet und mit der Dunstabzugshaube über eine Luftleitung verbunden. Durch eine separate Anordnung der Luftaufbereitungsvorrichtung kann eine Reihe von Vorteilen erzielt werden. Zum Beispiel ist die Luftaufbereitungsvorrichtung bei dieser Anordnung für den Benutzer zugänglich ohne eine Verkleidung oder andere Teile der Dunstabzugshaube entfernen zu müssen. Diese Zugänglichkeit ist beispielsweise zum Wechseln des Filterelementes notwendig. Weiterhin können durch die separate Anordnung der Luftaufbereitungsvorrichtung deren Abmessungen unabhängig von der Größe der Dunstabzugshaube gewählt werden. Der Luftbehandlungsraum und damit auch die Größe des Filterelementes kann daher bei dieser Anordnung groß sein und somit kann eine zuverlässige Aufbereitung des Luftstroms gewährleistet werden.

Gemäß einer bevorzugten Ausführungsform stellt die Dunstabzugsvorrichtung eine Umluftvorrichtung dar. Als Umluftvorrichtung wird hierbei eine Vorrichtung bezeichnet, bei der die in der Dunstabzugsvorrichtung behandelte Luft nach der Behandlung zumindest teilweise wieder in den Raum geführt wird, in dem die Dunstabzugsvorrichtung betrieben wird. Dieser Raum ist in der Regel eine Küche.

Vorteile und Merkmale, die bezüglich der Luftaufbereitungsvorrichtung beschrieben werden, gelten - soweit anwendbar - entsprechend für die erfindungsgemäße Dunstabzugsvorrichtung und umgekehrt.

Die Erfindung wird im Folgenden erneut unter Bezugnahme auf die beiliegenden Zeichnungen erläutert. Hierbei zeigen:
Figur 1: eine schematische, perspektivische Ansicht einer Ausführungsform der erfindungsgemäßen Dunstabzugsvorrichtung;
Figur 2: eine schematische, perspektivische Ansicht des Innenraums einer Ausführungsform der erfindungsgemäß verwendeten Luftaufbereitungsvorrichtung; und
Figur 3: eine schematische, perspektivische Schnittansicht einer Ausführungsform der erfindungsgemäß verwendeten Luftaufbereitungsvorrichtung.

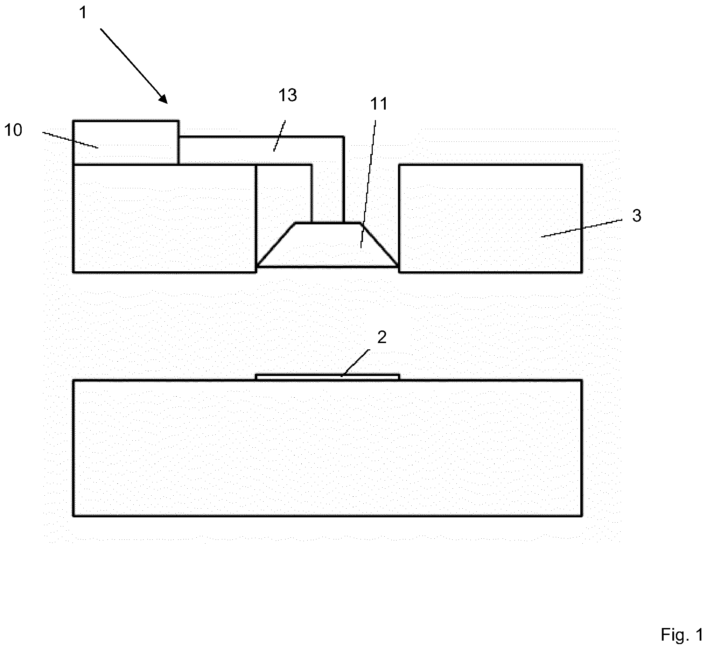

In Figur 1 ist eine Ausführungsform der erfindungsgemäßen Dunstabzugsvorrichtung schematisch gezeigt.

In Figur 1 ist eine schematische Ansicht einer Küchenzeile gezeigt. Ein Kochfeld 2 ist in den Unterschränken der Kochzeile vorgesehen. Oberhalb des Kochfeldes 2, das einen Herd oder dergleichen darstellen kann, ist eine Ausführungsform der erfindungsgemäßen Dunstabzugsvorrichtung 1 gezeigt. Die Dunstabzugsvorrichtung 1 umfasst eine Dunstabzugshaube 11. In der Dunstabzugshaube 11 ist ein Lüfter (nicht gezeigt) vorgesehen, über den Dünste und Wrasen, die von dem Kochfeld 2 aufsteigen, angesaugt werden. In der Dunstabzugshaube 11 werden die Dünste und Wrasen über Filter, insbesondere Fettfilter (nicht gezeigt), von Fett- und Flüssigkeitspartikeln befreit. Von der Dunstabzugshaube 11 erstreckt sich nach oben eine Luftleitung 13 in Form eines Luftrohres. Die in der Dunstabzugshaube 11 vorgereinigte Luft, die immer noch eine gewisse Menge an Verunreinigungen, insbesondere Geruchsstoffe, in sich trägt, wird über die Verrohrung oder Luftleitung 13 zu einer Luftaufbereitungsvorrichtung 10 geleitet. Die Luftaufbereitungsvorrichtung 10 ist in der dargestellten Ausführungsform auf einem Oberschrank 3 der Küchenzeile angeordnet. Die Anordnung der Luftaufbereitungsvorrichtung 10 ist aber nicht auf diese Position beschränkt. Die Luftaufbereitungsvorrichtung 10 kann auch unmittelbar oberhalb der Dunstabzugshaube 11 oder in dem Gehäuse der Dunstabzugshaube 11 vorgesehen sein.

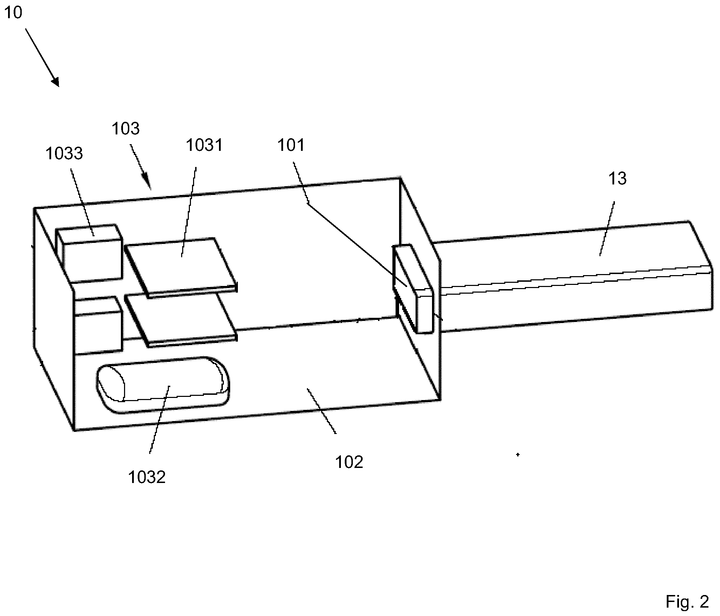

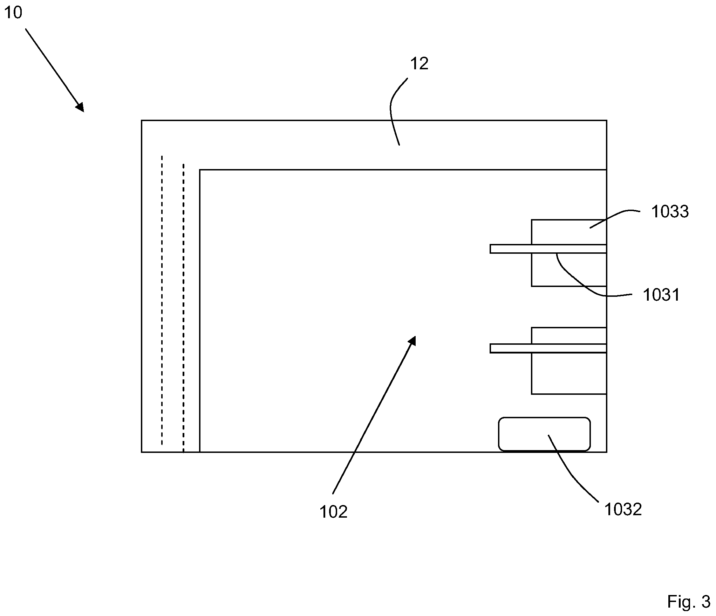

In Figur 2 ist der Innenraum einer Ausführungsform der erfindungsgemäß verwendeten Luftaufbereitungsvorrichtung 10 schematisch gezeigt. Die Luftaufbereitungsvorrichtung 10 weist ein kastenförmiges Gehäuse auf. In der dargestellten Ansicht sind die Vorderseite und Oberseite des kastenförmigen Gehäuses ausgespart. Diese Seiten des Gehäuses können durch Lochbleche gebildet sein, über die Luft aus dem Gehäuse austreten kann. Wie in Figur 3 gezeigt, ist an der Oberseite und Vorderseite der Luftaufbereitungsvorrichtung 10 ein Filterelement 12 vorgesehen. In der Stirnseite des Gehäuses ist ein Lufteinlass 101 vorgesehen, der mit der Luftleitung 13 von der Dunstabzugshaube 11 verbunden ist. Die Rückseite, der Boden, die Stirnseiten sowie die Oberseite und die Vorderseite des Gehäuses der Luftaufbereitungsvorrichtung 10 begrenzen den Luftbehandlungsraum 102.

Im diesem Luftbehandlungsraum 102, das heißt im Inneren der Luftaufbereitungsvorrichtung 10, sind Aktivierungsvorrichtungen 103 zur aktiven Luftbehandlung angeordnet. In der dargestellten Ausführungsform sind als Aktivierungsvorrichtungen 103 plattenförmige Elektroden 1031 vorgesehen, die zur Erzeugung von Energie mittels dielektrisch behinderten Entladung dienen. Weiterhin ist eine Plasmaquelle 1032 angedeutet, die alternativ oder zusätzlich vorgesehen sein kann. Weiterhin sind in der Figur 2 auch elektronische oder elektrische Bauteile 1033 angedeutet, die in dem Luftbehandlungsraum 102 zum Betrieb der Aktivierungsvorrichtungen 103 vorgesehen sein können.

Wie sich aus Figur 3 ergibt, ist in der dargestellten Ausführungsform an der Vorderseite und der Oberseite des Luftbehandlungsraums 102 ein Filterelement 12 vorgesehen. Das Filterelement 12 kann einteilig, also L-förmig ausgestaltet sein. Es liegt aber auch im Rahmen der Erfindung an der Oberseite und der Vorderseite ein oder mehrere getrennte Filterelemente 102 vorzusehen. Auch können weitere Seiten der Luftaufbereitungsvorrichtung 1 und insbesondere des Luftbehandlungsraums 102 zumindest teilweise mit einem oder mehreren Filterelementen 12 abgedeckt sein.

In dem Luftbehandlungsraum 102 wird die noch mit Geruchsstoffen und gegebenenfalls weiteren Verunreinigungen beladene Luft, die über die Luftleitung 13 von der Dunstabzugshaube 11 zu der Luftaufbereitungsvorrichtung 10 geleitet wird, behandelt. Hierbei werden zum Teil auch reaktive Spezies, wie Ozon, freigesetzt. Die so nachbehandelte Luft tritt dann über das Filterelement 12 aus der Luftaufbereitungsvorrichtung 10 aus. Hierbei werden in dem Filterelement 12 noch nicht beseitigte Geruchsstoffe und andere Verunreinigungen, wie beispielsweise Feuchtigkeit, ausgefiltert. Da in dem Filterelement 12 als Filtermaterial zumindest teilweise mineralische Adsorber enthalten sind, werden die Geruchsstoffe und andere Verunreinigungen sowie auch gegebenenfalls gebildete reaktive Spezies in dem Filterelement 12 zurückgehalten und die Luft kann in gereinigter Form in die Umgebung abgegeben werden. Insbesondere kann die Luft ohne Bedenken in den Raum, in dem die Luftaufbereitungsvorrichtung 10 betrieben wird, im vorliegenden Fall die Küche, abgegeben werden.

Das Filterelement 12 kann, wie in Figur 3 schematisch angedeutet ist, einlagig oder mehrlagig ausgestaltet sein. Hierbei kann die Zusammensetzung des Filtermaterials bei einem mehrlagigen Aufbau von einer Schicht zur anderen variieren. So kann beispielsweise in der Schicht, die dem Luftbehandlungsraum 102 zugewandt ist, ein Filtermaterial vorgesehen sein, das insbesondere zur Aufnahme von Feuchtigkeit ausgelegt ist. In der weiteren Schicht oder den weiteren Schichten kann dann Filtermaterial verwendet werden, das insbesondere zur Aufnahme von Geruchsstoffen geeignet ist. Auch bei dieser mehrlagigen Ausgestaltung ist in zumindest einer, vorzugsweise aber in allen Schichten als Filtermaterial zumindest teilweise ein mineralischer Adsorber vorgesehen.

Mit der vorliegenden Erfindung wird alternativ zu der einfachen Reinigung von Luft durch Aktivkohlefilter eine Lösung vorgeschlagen bei der Filter basierend auf mineralischen Adsorbern, beispielsweise smektitreichen Tonerden, Bentoniten oder Halloysiten, verwendet werden. Diese Substanzen zeichnen sich durch ihre positiven Adsportionseigenschaften aus. Sowohl Gerüche als auch reaktive Substanzen wie Ozon können durch diese Adsorber zurückgehalten werden. Katalytische Eigenschaften der Mineraladsorber werden bei der vorliegenden Erfindung genutzt. Zudem kann auch eine Kombination von Aktivkohle und mineralischem Adsorber, beispielsweise als Zusatz oder mehrlagiger Filter, bei der vorliegenden Erfindung Verwendung finden.

Die vorliegende Erfindung weist eine Reihe von Vorteilen auf. Insbesondere weisen mineralische Adsorber den Vorteil auf, dass sie im Gegensatz zu Aktivkohle nicht brennbar sind. Des Weiteren kann abhängig von der jeweiligen Substanz, die aus dem Luftstrom beseitigt werden soll, ein besseres Rückhaltevermögen erzielt werden. Außerdem ist eine Erhöhung der Filterstandzeit möglich. Die Sicherheit der Luftreinigungsvorrichtung kann insgesamt erhöht werden. Durch eine Kombination von Aktivkohle und mineralischem Adsorber / mineralischen Adsorbern können eventuell auftretende Synergieeffekte genutzt werden. In einem mehrlagigen Filterelement können beispielsweise einzelne Stoffgruppen gezielt voneinander getrennt aus dem Luftstrom entfernt werden. Daraus resultiert auch eine erhöhte Standzeit des Gesamtfilters.

### Bezugszeichenliste

- 1: Dunstabzugsvorrichtung
- 10: Luftaufbereitungsvorrichtung
- 101: Lufteinlass
- 102: Luftbehandlungsraum
- 103: Aktivierungsvorrichtung
- 1031: Elektrode
- 1032: Plasmaquelle
- 1033: elektrische/elektronische Bauteile
- 11: Dunstabzugshaube
- 12: Filterelement
- 13: Luftleitung

- 2: Kochfeld
- 3: Oberschrank

## Patentansprüche

1. Dunstabzugsvorrichtung, die eine Dunstabzugshaube (11) und zumindest eine Luftaufbereitungsvorrichtung (10) aufweist, , die zumindest eine elektrisch betriebene Aktivierungsvorrichtung (103) zur aktiven Luftbehandlung und zumindest ein Filterelement (12), das einen passiven Filter darstellt, aufweist, wobei die Luftaufbereitungsvorrichtung (10) einen Luftbehandlungsraum (102) aufweist, in dem die Ionisierungs- und/ oder Dissoziierungsvorrichtung vorgesehen ist, der Luftbehandlungsraum (102) zumindest bereichsweise durch zumindest eines der Filterelemente (12) begrenzt wird und das mindestens ein Filterelement (12) zur Filterung nach oder während der aktiven Luftbehandlung dient und Filtermaterial aufweist, das zumindest teilweise aus zumindest einem mineralischen Adsorber besteht, **dadurch gekennzeichnet, dass** die Aktivierungsvorrichtung (103) zur aktiven Luftbehandlung eine lonisierungs- und/oder Dissoziierungsvorrichtung umfasst, die ein Plasmagenerator ist.

2. Dunstabzugsvorrichtung nach Anspruch 1, **dadurch gekennzeichnet, dass** mindestens einer der mineralischen Adsorber zumindest teilweise ein Silikat, insbesondere ein Schichtsilikat darstellt.

3. Dunstabzugsvorrichtung nach einem der Ansprüche 1 oder 2, **dadurch gekennzeichnet, dass** der mineralische Adsorber smektithaltige Tonerde, Bentonit oder Halloysit darstellt.

4. Dunstabzugsvorrichtung nach einem der Ansprüche 1 bis 3, **dadurch gekennzeichnet, dass** das Filtermaterial eine Mischung aus einem mineralischen Adsorber und mindestens einem weiteren mineralischen Adsorber oder aus mindestens einem mineralischen Adsorber und Aktivkohle darstellt.

5. Dunstabzugsvorrichtung nach einem der Ansprüche 1 bis 4, **dadurch gekennzeichnet, dass** das Filtermaterial in Schichten in dem Filterelement vorliegt, wobei die Zusammensetzung von zumindest zwei Schichten unterschiedlich zueinander ist.

6. Dunstabzugsvorrichtung nach einem der Ansprüche 1 bis 5, **dadurch gekennzeichnet, dass** die Luftaufbereitungsvorrichtung (10) zu der Dunstabzugshaube (11) separat angeordnet und mit der Dunstabzugshaube (11) über eine Luftleitung (13) verbunden ist.

7. Dunstabzugsvorrichtung nach einem der Ansprüche 1 bis 6, **dadurch gekennzeichnet, dass** die Dunstabzugsvorrichtung (1) eine Umluftvorrichtung darstellt.

## Claims

1. Fume hood device which comprises a fume hood (11) and at least one air preparation device (10), which comprises at least one electrically operated activation device (103) for active air treatment and at least one filter element (12) which constitutes a passive filter, wherein the air preparation device (10) comprises an air treatment chamber (102) in which the ionising or dissociating device is provided, the air treatment chamber (102) is at least partially defined by at least one of the filter elements (12) and the at least one filter element (12) serves for filtering after or during the active air treatment and comprises filter material which at least partially consists of at least one mineral adsorbent, **characterised in that** the activation device (103) for the active air treatment comprises an ionising and/or dissociating device which is a plasma generator.

2. Fume hood device according to claim 1, **characterised in that** at least one of the mineral adsorbents constitutes at least partially a silicate, in particular a sheet silicate.

3. Fume hood device according to one of claims 1 or 2, **characterised in that** the mineral adsorbent constitutes smectite-containing clay, bentonite or halloysite.

4. Fume hood device according to one of claims 1 to 3, **characterised in that** the filter material constitutes a mixture of a mineral adsorbent and at least one further mineral adsorbent or at least one mineral adsorbent and activated carbon.

5. Fume hood device according to one of claims 1 to 4, **characterised in that** the filter material is present in layers in the filter element, wherein the composition of at least two layers is different from one another.

6. Fume hood device according to one of claims 1 to 5, **characterised in that** the air preparation device (10) is arranged separately from the fume hood (11) and is connected to the fume hood (11) via an air line (13).

7. Fume hood device according to one of claims 1 to 6, **characterised in that** the fume hood device (1) constitutes an air circulating device.

## Revendications

1. Dispositif d'aspiration de vapeur présentant une hotte aspirante (11) et au moins un dispositif de conditionnement de l'air (10), qui présente au moins un dispositif d'activation électrique (103) pour le traitement actif de l'air et au moins un élément filtrant (12) représentant un filtre passif, dans lequel le dispositif de conditionnement de l'air (10) présente une chambre de traitement de l'air (102), dans laquelle le dispositif d'ionisation et/ou de dissociation est prévu, la chambre de traitement de l'air (102) est limitée au moins par zones par au moins un des éléments filtrants (12) et l'au moins un élément filtrant (12) sert au filtrage après ou durant le traitement actif de l'air et présente un matériau filtrant composé au moins en partie d'au moins un adsorbant minéral, **caractérisé en ce que** le dispositif d'activation (103) comprend, pour le traitement actif de l'air, un dispositif d'ionisation et/ou de dissociation qui est un générateur de plasma.

2. Dispositif d'aspiration de vapeur selon la revendication 1, **caractérisé en ce qu'**au moins un des adsorbants minéraux représente au moins en partie un silicate, en particulier un silicate en feuillets.

3. Dispositif d'aspiration de vapeur selon l'une des revendications 1 ou 2, **caractérisé en ce que** l'adsorbant minéral représente de l'alumine, de la bentonite ou de l'halloysite contenant de la smectite.

4. Dispositif d'aspiration de vapeur selon l'une des revendications 1 à 3, **caractérisé en ce que** le matériau filtrant représente un mélange d'un adsorbant minéral et d'au moins un adsorbant minéral supplémentaire ou d'au moins un adsorbant minéral et de charbon actif.

5. Dispositif d'aspiration de vapeur selon l'une des revendications 1 à 4, **caractérisé en ce que** le matériau filtrant est présent en couches dans l'élément filtrant, la composition d'au moins deux couches étant différente l'une de l'autre.

6. Dispositif d'aspiration de vapeur selon l'une des revendications 1 à 5, **caractérisé en ce que** le dispositif de conditionnement d'air (10) est disposé séparément de la hotte aspirante (11) et est relié à la hotte aspirante (11) via un conduit à air (13).

7. Dispositif d'aspiration de vapeur selon l'une des revendications 1 à 6, **caractérisée en ce que** le dispositif d'aspiration de vapeur (1) représente un dispositif à circulation d'air.
